# EUROPEAN PATENT APPLICATION

(11) **EP 0 650 875 A1**
(43) Date of publication of application: **03.05.1995**
(21) Application number: 94117155.5
(22) Date of filing: 31.10.1994
(51) Int. Cl.: B60R 25/10

(54) **Vehicular motion detector and method**

(30) Priority: 01.11.1993 US 143735
(71) Applicant: MOTOROLA, INC., Schaumburg, IL 60196 (US)
(72) Inventor: Remboski, Donald J., Dearborn, Michigan 48126 (US); Yang, Jin, Canton, Michigan 48187 (US)
(74) Representative: Hudson, Peter David

(57) **Abstract**

A device for detecting motion of a vehicle uses a fuel tank level sensor (111) that provides a signal (112) indicative of a level of fuel (105) in a fuel tank (103). A filter (117), preferably in a highpass configuration, receives the signal (112) and provides a filtered signal (123) indicative of changes in the level of fuel in the fuel tank (103) greater than a predetermined rate of change. Preferably, a comparator (127) provides an indication of motion of the fuel in the fuel tank (103) when the filtered signal (123) exceeds a predetermined threshold (125). In an alternative embodiment, the signal (112) from the fuel tank level sensor (111) is monitored by an alarm module (201). The alarm module (201) uses the detected motion in tandem with various other vehicular inputs (129,203) to determine either an absolute level or a stability of the fuel level, resulting in sounding of an alarm (137). A method for the detection of motion is also detailed.

## Description

### Field of the Invention

This invention is generally directed to the field of motion detectors, and specifically for the detection of motion in a vehicular fuel tank. In particular, it is useful for providing a detection of motion in a vehicular alarm system.

### Background of the Invention

Contemporary vehicles often employ motion detectors to enhance the performance of certain systems of the vehicle. These systems may include vehicular alarm systems. These vehicular alarm systems may use a motion detector to warn the alarm system that the vehicle is being jacked-up to remove a tire, or that the vehicle is being lifted to be towed. Given this information from the motion detector the alarm system may activate the alarm to warn the vehicle operator or others of the action.

In present vehicular alarm systems, this motion detector is typically based on a mercury switch. These mercury switches are difficult to package, require extra labor and cost to install and add to system complexity thus unreliability.

What is needed is an improved motion detector for application in a vehicle that is less costly, easy to install, and more reliable than present motion detectors.

### Brief Description of the Drawings

FIG. 1 is a system block diagram of a motion detector applied in an alarm system in accordance with a preferred embodiment;
FIG. 2 is a system block diagram of a motion detector applied in an alarm system in accordance with an alternative embodiment; and
FIG. 3 is a flow chart illustrating method steps associated with the alternative embodiment shown in FIG. 2; and
FIG. 4 is another flow chart illustrating alternative method steps associated with the alternative embodiment shown in FIG. 2.

### Detailed Description of a Preferred Embodiment

In a preferred embodiment, a device for detecting motion of a vehicle uses a fuel tank level sensor that provides a signal indicative of a level of fuel in a fuel tank. A filter, preferably in a highpass configuration, receives the signal provided by the fuel tank level sensor, and provides a filtered signal indicative of changes in the level of fuel in the fuel tank greater than a predetermined rate of change. Preferably, a comparator provides an indication of motion of the fuel in the fuel tank when the filtered signal exceeds a predetermined threshold.

In an alternative embodiment, the signal from the fuel tank level sensor is monitored by an alarm module. The alarm module uses the detected motion in tandem with various other vehicular inputs to determine a condition resulting in sounding of an alarm. A method for the detection of motion is also detailed. An advantage of these approaches over prior art approaches, is that an existing sensor is reused rather than using an additional sensor for the detection of motion. This existing sensor is presently used in vehicles as a fuel level, or quantity gauge. By reusing this existing sensor installation efforts are eliminated. Also, reliability is increased, and system cost is reduced because no separate sensor is required to detect motion. Next, details of the preferred, and alternate embodiments will be detailed.

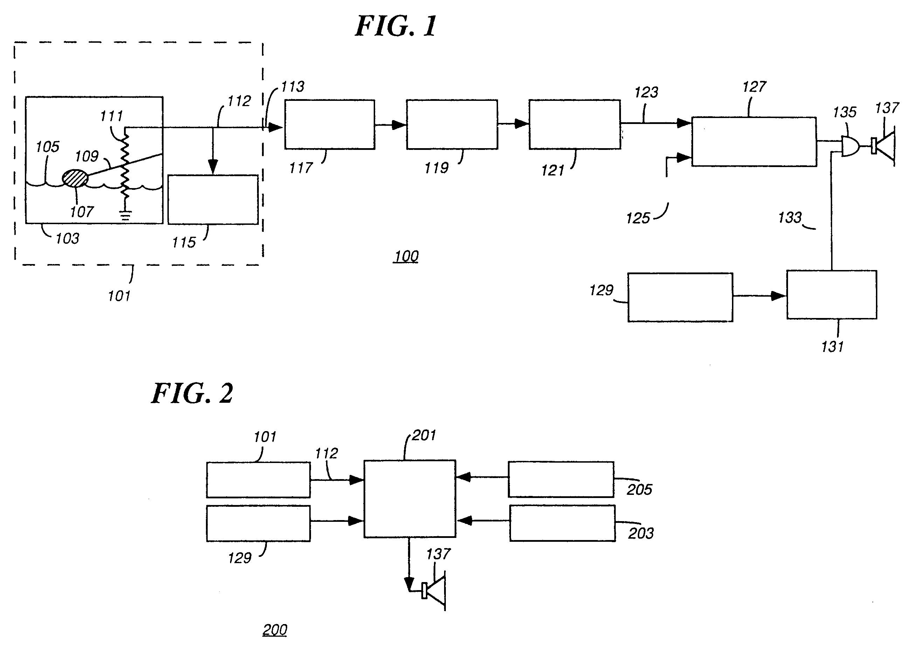

FIG. 1 shows system block diagram of the improved motion detector. A fuel level system 101 is mounted in a vehicle and includes a tank 103 partially filled with fuel 105. A float 107 is connected via a float arm 109 to a wiper of a variable resistor 111. One end of the variable resistor 111 is grounded, and another end is connected to a fuel gauge 115. The fuel gauge 115 supplies a constant bias current to the variable resistor 111. This causes a voltage, or signal 112 at an output 113 to vary as the float 107 moves the variable resistor wiper arm 109 either up or down depending on a level of the fuel 105 in the tank 103. This signal 112 is representative of the instantaneous fuel level in the tank 103.

In the preferred embodiment a change in voltage, or signal 112 at the output 113 of the fuel level system 101 is used to detect motion of the vehicle. This approach relies on an assumption that if the vehicle is in motion, the fuel level - thus the signal 112 at output 113 will change. Because this described fuel level system 101 is already installed in most vehicles, there is no need to have a separate sensor to detect motion. The described approaches rely on further processing the signal 112 to provide an indication of motion to construct a motion detector.

Since vehicle motion will cause ripples on a surface of the fuel 105, the float 107 will oscillate relatively rapidly about a central point related to the average fuel level. Vehicle motion is indicated by these rapid oscillations related to the ripples on the surface of the fuel 105. A filter 117, preferably having highpass attributes removes a portion of the signal related to an average or absolute fuel level, and passes signal fluctuations related to the ripples on the surface of the fuel 105. An amplitude of the signal fluctuations can then be estimated by taking an absolute value, as shown in block 119, of the signal passed by the highpass filter 117. Further processing by a lowpass filter 121 smoothes the signal from the absolute value function 119 to form an estimate of average ripple amplitude. The resulting filtered, or motion indicating, signal 123, is indicative of changes in the level of fuel in the fuel tank greater than a predetermined rate of change and thereby indicates vehicle motion.

The signal 123 may be conveniently used by various vehicular control systems. In the preferred embodiment the signal 123, is further conditioned to be used to activate an alarm. To implement this the motion indicating signal 123 is compared to a threshold 125 using a comparator 127 to indicate motion greater than a certain value. This threshold may typically be predetermined dependent on the specifics of the application and the vehicle that the system is deployed in.

In the system 100 presented here, an alarm 137 will be sounded dependent on the result of the signal vs. threshold comparison of comparator 127. However, because the vehicle's operator would not want the alarm transducer 137 to activate every time the threshold 125 was overcome by the signal 123, a logical AND gate 135 is used to inhibit this action when the vehicle is expected to be in motion due to normal service. This normal service is defined as when the vehicle is not intentionally put into an alarm state by an operator.

When it is put into an alarm state, the alarm 137 will be enabled to respond to a signal 123 exceeding the threshold 125. To effect this action, an alarm module 131 will be armed, or put in the active state by the operator through an activation of an alarm keyswitch 129. As a result, an enable signal 133 will be provided from the alarm module 131 to the logical AND gate 135 thereby enabling passage of the result of the signal vs. threshold comparison from element 127.

In an alternative embodiment, illustrated in FIG. 2, an alarm system 200 is constructed. Integral to the alarm system 200 is an alarm module 201 that includes a Motorola MC68HC05B5 microcontroller. Peripheral to the MC68HC05B5 microcontroller are the aforementioned fuel level system 101, the alarm keyswitch 129, a vehicular speed sensor 203, an ignition keyswitch 205, and the alarm transducer 137. The alarm module's 201 MC68HC05B5 microcontroller executes an improved method of detecting motion of the vehicle based principally on the general approach described preferred embodiment, with a few minor modifications convenient in a vehicular alarm system. As mentioned earlier the output 113 of the fuel level system 101 is an analog voltage, or signal 112, representative of the instantaneous fuel level in the tank 103. The MC68HC05B5 microcontroller receives the analog signal 112 into an indigenous analog-to-digital converter. This signal 112 received from the output 113 of the fuel level system 101 is then converted into a digital number. Software routines well-known to those skilled in the art perform the function of the highpass filter 117, the absolute value function 119, and the lowpass filter 121. The condition of the alarm keyswitch 129 and the vehicular speed sensor 205 are read into digital inputs provided by the MC68HC05B5 microcontroller.

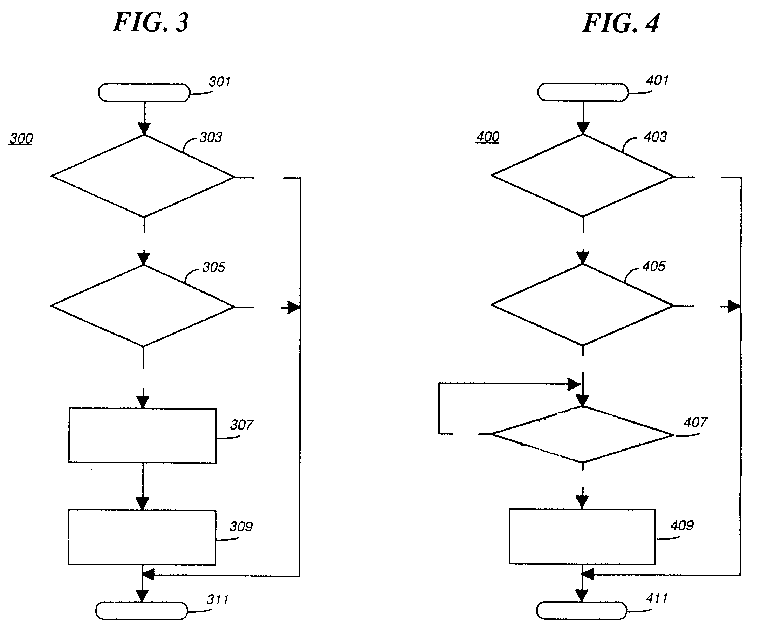

In FIG. 3 a flow chart illustrates the various method steps associated with the vehicular alarm system shown in FIG. 2. Method steps 300 shown here, are microcoded into the MC68HC05B5 microcontroller of the alarm module 201. This particular approach is used to be effective based on how an operator typically intends to use his vehicular alarm system. If the operator exists his vehicle and enables the alarm before the fuel reaches a stable level, a false alarm is possible. A time delay overcomes the false alarm problem by allowing the fuel level to stabilize before enabling the motion detector.

The execution of the method steps 300 starts with step 301. In step 303, the alarm module's 201 MC68HC05B5 microcontroller determines if the vehicle has been parked. This is accomplished by reading the status of the ignition keyswitch 205. If the ignition keyswitch 205 is turned on, then the vehicle is assumed not to be parked, and the routine is exited at step 311. If the ignition keyswitch 205 is turned off, then the vehicle is assumed to be parked, and step 305 is executed.

In step 305 the MC68HC05B5 microcontroller determines if the alarm has been enabled by reading the alarm keyswitch 129. If the alarm keyswitch 129 is turned off, then the alarm system is assumed not to be enabled, and the routine is exited at step 311. If the alarm keyswitch 129 is turned on, then the alarm system is assumed to be enabled, and step 307 is executed.

In step 307 a delay time is invoked to allow the fuel in the fuel tank 103 to come to rest after the alarm keyswitch 129 has been initially activated. Without provision for this delay time the alarm transducer 137 could be falsely sounded because the fuel 105 in the tank 103 typically sloshes around after a vehicle is parked for a certain period. This period is compensated for with the delay time in step 307. Typically, this time may be about 1 minute.

Next, in step 309 the motion detector function is enabled. If the signal 112 representative of the output 113 of the fuel level system 101, conditioned by the highpass filter, absolute value function, and lowpass filter exceeds a predetermined level, then the alarm transducer 137 is activated and the routine is exited in step 311.

In another embodiment, an alternative method is described. This method monitors the signal provided from said fuel tank level sensor, and determines a slope polarity signal indicative of slope direction of average changes of the level of fuel in the fuel tank greater than a predetermined rate of change. A negative state of the slope polarity signal indicates that the motion of the vehicle is stabilizing in a monotonically stable manner. A positive state of the slope polarity signal indicates that the vehicle motion is not settling in a monotonically stable manner - thus motion is being detected as the fuel is being increasingly disturbed. Then, the method provides an indication of motion of the fuel in the fuel tank when the slope polarity signal indicates a positive slope polarity - or positive state.

In FIG. 4 another flow chart illustrates alternative method steps associated with the alternative embodiment shown in FIG. 2. Again, the method steps 400 shown here are microcoded into the MC68HC05B5 microcontroller of the alarm module 201. Here however, a somewhat different approach is taken to solve the aforementioned fuel tank level settling problem due to fuel slosh.

In step 401 the alternative method steps commence. In step 403, the alarm module's 201 MC68HC05B5 microcontroller determines if the vehicle has been parked. This is accomplished by reading the status of the ignition keyswitch 205. If the ignition keyswitch 205 is turned on, then the vehicle is assumed not to be parked, and the routine is exited at step 411. If the ignition keyswitch 205 is turned off, then the vehicle is assumed to be parked, and step 405 is executed.

Next, in step 405 the MC68HC05B5 microcontroller determines if the alarm has been enabled by reading the alarm keyswitch 129. If the alarm keyswitch 129 is turned off, then the alarm system is assumed not to be enabled, and the routine is exited at step 411. If the alarm keyswitch 129 is turned on, then the alarm system is assumed to be enabled, and step 407 is executed.

In step 407 MC68HC05B5 microcontroller inputs the signal 112 associated with the output 113 of the fuel level system 101. As described in conjunction with FIG. 3, the signal 112 received from the output 113 of the fuel level system 101 is first converted into a digital number and conventional software routines perform the function of the highpass filter 117, the absolute value function 119, and the lowpass filter 121. The just-mentioned steps of highpass filtering, absolute value determination, and lowpass filtering provide an indication of average changes of the level of fuel in the fuel tank greater than a predetermined rate of change. Then the method determines a slope polarity of this signal. If the slope polarity of the signal is positive, then this would indicate that fuel was being disturbed. If fuel was not being disturbed, and was settling in a monotonically stable manner, then the slope polarity of the signal would be negative. While the slope polarity is negative the test 407 is repeated. If the slope polarity of the signal becomes positive, then step 409 is executed.

In step 409 the alarm transducer 137 is enabled. Then the routine 400 is exited.

In conclusion, in a preferred embodiment, an improved motion detector has been described that overcomes the limitations of prior art vehicular motion detectors. This embodiment goes on to describe a vehicular alarm system employing the improved detector. The motion detector presented is less costly, has virtually no installation, and more reliable than present motion detectors because a separate sensor is not used.

Additionally, two other embodiments extend the basic vehicular motion detector's function to show other implementations in a vehicular alarm system. Although a fuel tank level sensory system is used here to provide motion detection for an alarm system, other vehicular systems may also benefit from the use of this system with similar beneficial results.

## Claims

1. An alarm system which detects motion of a vehicle comprising:
sensor means for providing a signal indicative of changes in a level of fuel in a fuel tank; and
alarm means for providing a perceivable alarm when a level of the signal provided by said sensor means exceeds a predetermined threshold.

2. A in accordance with claim 1 wherein said sensor means comprises:
filter means for receiving the signal provided from a fuel tank level sensor, and for providing a filtered signal indicative of changes in the level of fuel in the fuel tank greater than a predetermined rate of change; and
wherein the alarm means comprises comparator means for providing an indication of motion of the fuel in the fuel tank when the filtered signal provided by said filter means exceeds a predetermined threshold.

3. A device in accordance with claim 1 wherein said filter means comprises a highpass filter.

4. A in accordance with claim 1 wherein said sensor means comprises:
slope determination means for receiving the signal provided from a fuel tank level sensor, and for providing slope polarity signal indicative of average changes of the level of fuel in the fuel tank greater than a predetermined rate of change; and
wherein the alarm means comprises comparator means for providing an indication of motion of the fuel in the fuel tank when the slope polarity signal provided by said slope determination means indicates a positive slope polarity.

5. A device in accordance with claim 4 wherein said slope determination means comprises:
highpass filter means for receiving the signal provided from said fuel tank level sensor, and for providing a highpass filtered signal indicative of changes in the level of fuel in the fuel tank greater than a predetermined rate of change;
absolute value determination means for receiving the highpass filtered signal provided from said highpass filter means, and for providing an absolute value signal indicative of absolute changes in the level of fuel in the fuel tank greater than the predetermined rate of change; and
lowpass filter means for receiving the absolute value signal provided from said absolute value determination means, and for providing a lowpass filtered signal indicative of average changes of the absolute changes in the level of fuel in the fuel tank greater than the predetermined rate of change.

6. A device for detecting motion of a vehicle with a fuel tank level sensor that provides a signal indicative of a level of fuel in a fuel tank, said device comprising:
a highpass filter for receiving the signal provided from said fuel tank level sensor, and for providing a highpass filtered signal indicative of changes in the level of fuel in the fuel tank greater than a predetermined rate of change;
an absolute value determination circuit for receiving the highpass filtered signal provided from said highpass filter, and for providing an absolute value signal indicative of absolute changes in the level of fuel in the fuel tank greater than the predetermined rate of change;
a lowpass filter for receiving the absolute value signal provided from said absolute value determination means, and for providing a lowpass filtered signal indicative of average changes of the absolute changes in the level of fuel in the fuel tank greater than the predetermined rate of change; and
a comparator for providing an indication of motion of the fuel in the fuel tank when the lowpass filtered signal provided by said lowpass filter exceeds a predetermined threshold.

7. An alarm system which detects motion of a vehicle comprising:
a fuel tank level sensor for providing a signal indicative of a level of fuel in a fuel tank;
highpass filter means for receiving the signal provided from said fuel tank level sensor, and for providing a highpass filtered signal indicative of changes in the level of fuel in the fuel tank greater than a predetermined rate of change;
absolute value determination means for receiving the highpass filtered signal provided from said highpass filter means, and for providing an absolute value signal indicative of absolute changes in the level of fuel in the fuel tank;
lowpass filter means for receiving the absolute value signal provided from said absolute value determination means, and for providing a lowpass filtered signal indicative of changes in the level of fuel in the fuel tank;
comparator means for providing an indication of motion of the fuel in the fuel tank when the lowpass filtered signal provided by said lowpass filter means exceeds a predetermined threshold; and
an alarm mechanism for enabling a perceivable alarm when the comparator means provides an indication of motion.
